Europäisches Patentamt

European Patent Office

Office européen des brevets

(19)

(11) Veröffentlichungsnummer : **0 135 931**
**B1**

(12) **EUROPÄISCHE PATENTSCHRIFT**

(45) Veröffentlichungstag der Patentschrift :
17.08.88

(21) Anmeldenummer : 84111433.3

(22) Anmeldetag : 25.09.84

(51) Int. Cl.⁴ : **H 04 Q 3/54**

(54) **Zentralsteuereinheit eines Vermittlungssystems insbesondere Fernsprech-Vermittlungssystems.**

(30) Priorität : 26.09.83 DE 3334792

(43) Veröffentlichungstag der Anmeldung :
03.04.85 Patentblatt 85/14

(45) Bekanntmachung des Hinweises auf die Patenterteilung : 17.08.88 Patentblatt 88/33

(84) Benannte Vertragsstaaten :
AT BE CH DE FR GB IT LI NL SE

(56) Entgegenhaltungen :
DE-A- 2 001 832
REVIEW OF THE ELECTRICAL COMMUNICATION
LABORATORIES, Band 30, Nr. 5, September 1982,
Seiten 792-801, Tokyo, JP; A. NIWA u.a.: "Multiprocessor control hardware design for DTS-11 digital toll
switching system"
NATIONAL TELECOMMUNICATIONS CONFERENCE,
New Orleans, 29. November - 3. Dezember 1981,
Band 1, Seiten A6.1.1 - A6.1.5, IEEE, New York; Y.
HORI et al.: "Fault detection and recovery for a multiprocessor controlled digital switching system"
INTERNATIONAL CONFERENCE ON COMMUNICA-
TIONS, Seattle, 8.-12. Juni 1980, Band 1, Seiten 18.2.1
- 18.2.8, IEEE, New York, US; S.E. PUCCINI et al.:
"Architecture of GTD-5 EAX digital family"
INTERNATIONAL SWITCHING SYMPOSIUM, Montreal, 21.-25. September 1981, Session 21A, Paper 2,
Seiten 1-7; M. WARD: "An enhanced processor for
system X"
ELECTRICAL COMMUNICATION, Band 55, Nr. 1,
1980, Seiten 37-45, New York, US; P. SOMOZA et al.:
"Dynamic processor overload control for SPC switching systems"
(73) Patentinhaber : Siemens Aktiengesellschaft Berlin
und München
Wittelsbacherplatz 2
D-8000 München 2 (DE)

(72) Erfinder : Bitzinger, Rudolf, Dipl.-Ing.
Lechbruckerstrasse 11
D-8000 München 71 (DE)
Erfinder : Engl, Walter, Dipl.-Ing.
Am Kellerberg 4
D-8152 Feldkirchen-W. (DE)
Erfinder : Humml, Siegfried
An der Freiheit 130
D-8122 Penzberg (DE)
Erfinder : Schreier, Klaus, Dipl.-Ing.
Nonnenwaldstrasse 8a
D-8122 Penzberg (DE)

## Beschreibung

Die Erfindung geht von der im Oberbegriff des Patentanspruchs 1 genannten Zentralsteuereinheit aus. Es handelt sich hierbei um eine Zentralsteuereinheit für ein besonders großes Vermittlungssystem, bei dem häufig eine hohe Vielzahl von vermittlungstechnischen Funktionen simultan bzw. quasisimultan durchzuführen sind, wie z. B. die Überwachung des Teilnehmers auf Abheben und Rufnummernwahl, Wegesuche, Wegedurchschaltung, Signaltöne, Gebührenerfassung, Ansagen, Facilities verschiedenster Art, usw.

Solche Zentralsteuereinheiten müssen eine extrem hohe Verfügbarkeit aufweisen. Z. B. sollen alle durch die Zentralsteuereinheit bewirkten Störungen des Vermittlungssystems kürzer als 1 Minute pro Jahr Betriebsdauer betragen. Sowohl Verfügbarkeiten und Zuverlässigkeiten von Zentralsteuereinheiten sind für sich bekannte Aufgaben.

Zentralsteuereinheiten, welche aus einer hohen Vielzahl von Prozessoren bzw. Rechnern mit Hilfe eines allen Prozessoren bzw. Rechnern gemeinsamen Bussystems gebildet werden, sind für sich seit langem in der Diskussion, in verschiedener Weise entwickelt und, jedenfalls zum Teil, zumindest versuchsweise realisiert.

Bussysteme, welche eine wahlweise Verteilung der Aufgaben auf die verschiedenen Prozessoren bzw. Rechner zulassen, insbesondere mittels Arbitern, sind für sich in verschiedensten Varianten bekannt. Darunter gibt es auch außerordentlich komfortable, vielseitige, außerordentlich sichere Bussysteme mit hoher Verfügbarkeit, vgl. z. B. die nicht vorveröffentlichte DE-OS 33 28 405.

Zentralsteuereinheiten von Vermittlungssystemen haben bekanntlich neben den obenangegebenen vermittlungstechnischen Funktionen noch weitere Funktionen durchzuführen, insbesondere noch betriebstechnische und sicherungstechnische Funktionen. Zu den betriebstechnischen Funktionen gehören insbesondere Zuordnungen und Neuzuordnungen von Rufnummern zu Teilnehmeranschlüssen, Steuerung der Zusammenarbeit der verschiedenen Organe des Vermittlungssystems in genereller, nicht auf die einzelne aktuelle Verbindung bezogener Art wie Gebührentarifänderungen, Speicherausbau und damit verbundenen Adressenraumerweiterungen, Weiterausbau des Vermittlungsnetzwerkes bzw. der Teilnehmeranschlüsse, Installationen von bisher nicht vorgesehenen Facilities, Leitweglenkungsänderungen und Kurzwegänderungen, Bildtelefoneinführung, automatische Teilabschaltungen und stufenweise Wiedereinschaltungen nach Betriebsstörungen, Lastverteilungsänderungen, usw. Bei den sicherungstechnischen Funktionen handelt es sich hingegen insbesondere um routinemäßige und/oder durch Alarme ausgelöste Fehlersuche bzw. Fehlereinkreisungsfunktionen, welche mit- unter hierarchisch fein gegliedert sind entsprechend den sehr komplexen Fehlersuchverfahren in sehr großen Vermittlungssystemen von z. B. 50 000 Teilnehmeranschlüssen in einem einzigen Fernsprechamt.

Bei einer anderen bekannten Zentralsteuereinheit von Vermittlungssystemen (DE-A-2 001 832), bei der die einzelnen Prozessoren im wesentlichen gleich aufgebaut sind, steht wenigstens einer der Prozessoren als Ersatzprozessor in Reserve, der bei einem Ausfall eines der übrigen Prozessoren diesen vertritt, indem er die dort gespeicherten Programme übernimmt und abwickelt. Wenigstens ein weiterer Prozessor ist insofern mit der Ersatzschaltung befaßt, als er im Ersatzschaltefall ein in seinem Speicher enthaltenes Überwachungsprogramm abwickelt, das die Übernahme der in dem ausgefallenem Prozessor gespeicherten Programms an den Reserveprozessor steuert. Dieser weitere Prozessor steht aber auch in einem bestimmten Ausmaß wie die übrigen Prozessoren für die Abwicklung von die Vermittlungsfunktionen des Vermittlungssystems betreffenden Arbeitsprogrammen zur Verfügung. Der genannte Reserveprozessor ist, solange er sich im Bereitschaftszustand befindet, an der Abwicklung irgendwelcher Programme und insbesondere der Abwicklung von vermittlungstechnischen Programmen nicht beteiligt.

Es ist für sich außerdem bekannt, die Auslastung von Prozessoren auf verschiedenste Weise laufend zu überwachen und zu registrieren, insbesondere wenn der betreffende Prozessor bzw. Rechner zeitlich verschachtelt mehrere verschiedene Programme quasisimultan durchzuführen hat.

Bei einer Zentralsteuereinheit eines Vermittlungssystems der eingangs genannten Art sind die einzelnen Prozessoren normalerweise nicht so stark ausgelastet, daß es Schwierigkeiten bereiten würde bei Ausfall eines dieser Prozessoren einen oder mehrere der übrigen Prozessoren mit der zusätzlichen Abwicklung der bis dahin von dem ausgefallenen Prozessor bewirkten vermittlungstechnischen Funktionen zu betrauen, so daß bezüglich dieser vermittlungstechnischen Funktionen sich die Bereitstellung eines Reserveprozessors, wie dies bei der Zentralsteuereinheit gemäß der erwähnten DE-A-2 001 832 der Fall ist, erübrigen würde. Bezüglich der betriebs- und/oder sicherungstechnischen Funktionen müssen jedoch aus Sicherheitsgründen strengere Anforderungen gestellt werden, da eine nicht mit hoher Sicherheit ordnungsgemäße Durchführung dieser Funktionen den Betrieb des Vermittlungssystems insgesamt berührt.

Die Aufgabe der Erfindung ist, die im Oberbegriff des Patentanspruches 1 angegebene hochkomplexe Zentralsteuereinheit mit vielen, häufig stark ausgelasteten, mit verschiedensten Aufgaben befaßten, parallel arbeitenden Prozessoren bzw. Rechnern so weiterzubilden, daß der Hardwareaufwand gering ist. Insbesondere die betriebstechnischen Funktionen sollen mit sehr hoher Zuverlässigkeit und Verfügbarkeit gewährleistet bleiben.

Diese Aufgabe wird durch die im Patentanspruch 1 genannten Maßnahmen gelöst.

Die in den Unteransprüchen angegebenen Maßnahmen gestatten zusätzliche Vorteile zu erreichen, nämlich die Maßnahme gemäß Patentanspruch

2, die Kapazitäten der Prozessoren optimal auszunutzen, selbst falls jeder Prozessor jeweils verschiedenste vermittlungstechnische Aufgaben, die ihm vom Fall zu Fall jeweils zugeteilt werden, erfüllen sollen,

3, die Verteilung der vermittlungstechnischen Aufgaben auf die Prozessoren mit geringem Aufwand rasch so durchführen zu können, daß die 100 %ige Auslastung der meisten Prozessoren bzw. Rechner relativ selten eintritt,

4, das Speichern jeweils identischer Informationen in prozessorindividuellen Speichern stark einschränken zu können, so daß die Gesamtspeicherkapazität des Hauptspeichers und der prozessorindividuellen Speicher zusammengenommen geringer ist, als wenn nur prozessorindividuelle Speicher angebracht wären, wobei ein quasisimultaner Zugriff mehrerer Prozessoren auf den gemeinsamen Hauptspeicher trotzdem ermöglicht wird,

5, während der quasisimultanen Zusammenarbeit verschiedener Prozessoren mit dem Hauptspeicher besonders kurze Zugriffszeiten ermöglicht werden.

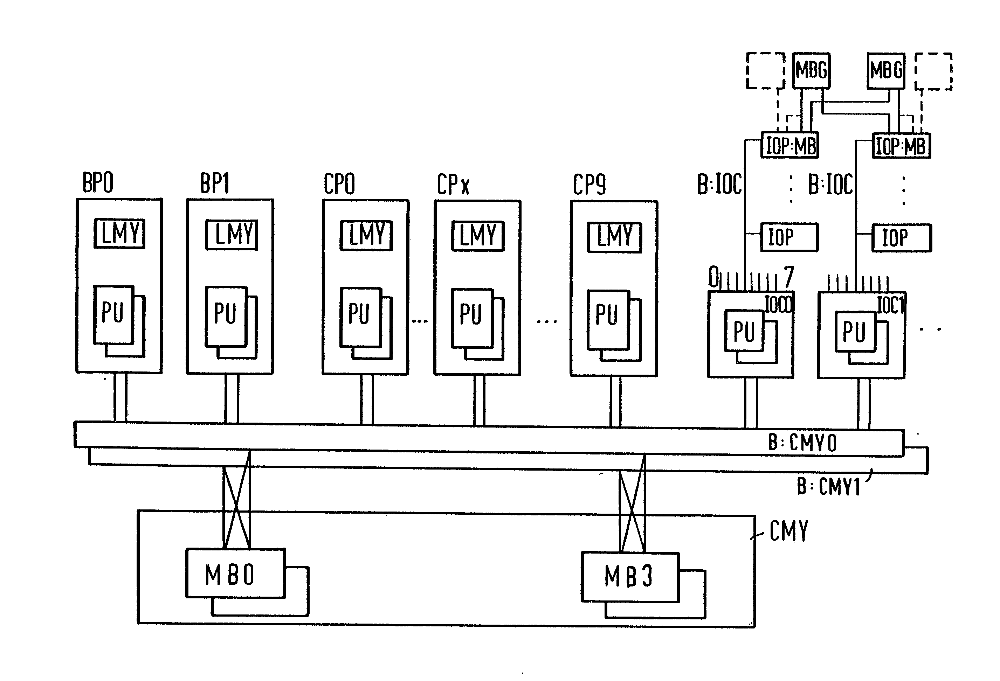

Die Erfindung wird anhand von einem Ausführungsbeispiel erläutert, welche in der Figur gezeigt ist.

Die Figur zeigt eine Zentralsteuereinheit, bei der zwei Basisprozessoren BPO BP1, sowie 10 weitere Prozessoren CPO... CP9 über das Bussystem B : CMY zusammenarbeiten. Aus Sicherheitsgründen ist das Bussystem gedoppelt, vgl. B : CMYO und B : CMY1. Jeder Prozessor enthält neben der eigentlichen Prozessoreinheit PU jeweils einen prozessorindividuellen lokalen Speicher LMY.

Alle Prozessoren BP/CP führen, zumindest wenn genügend Verbindungsanforderungen vorliegen, simultan jeweils vermittlungstechnische Funktionen aus, d. h. Funktionen zur Erfüllung momentaner Anforderungen, die von rufenden und gerufenen Teilnehmern an das Vermittlungssystem gestellt werden.

Die — im wesentlichen untereinander gleichaufgebauten — Basisprozessoren BP üben betriebs- und/oder sicherungstechnische Funktionen aus, sowie, insbesondere bei höheren Verkehrsdichten, zusätzlich vermittlungstechnische Funktionen. Die übrigen Prozessoren CP üben hingegen nur vermittlungstechnische Funktionen aus. Die beiden Basisprozessoren BP üben jedoch die betriebs- und/oder sicherungstechnischen Funktionen in unterschiedlicher Weise aus. Einer der beiden Basisprozessoren, z. B. der Basisprozessor BPO, übernimmt jeweils die Führung, wohingegen der zweite Basisprozessor, in diesem Fall also dann der Basisprozessor BP1, selbst seine Kapazität freihält, um evtl. vom ersten Basisprozessor BPO voll die betriebs- und/oder sicherungstechnischen Funktionen bei Bedarf zu übernehmen, so daß dann der zweite Basisprozessor BP1 voll und sofort die Führung für alle betriebs- und/oder sicherungstechnischen Funktionen übernimmt, wobei nun der erste Basisprozessor BPO sich davon freihält für eine evtl. spätere Neuübernahme der Führung der betriebs- und/oder sicherungstechnischen Funktionen. Diese Dopplung der Basisprozessoren BP ist aus Sicherheitsgründen nötig, damit stets ein einwandfrei arbeitender Basisprozessor BP zur Durchführung dieser betriebs- und/oder sicherungstechnischen Funktionen zur Verfügung steht, insbesondere im Alarmfall bei Wiederanlauf des Vermittlungssystems nach einer teilweisen oder völligen Abschaltung des Vermittlungssystems. Diese Funktionen können dann nicht irgendwelchen beliebigen anderen Prozessoren CP überlassen werden, da, insbesondere in extremen Notfällen, nicht genügend Zeit besteht, dazu erst einen einwandfreien Prozessor unter den übrigen Prozessoren CP auszusuchen, insbesondere für den genannten Wiederanlauf des Vermittlungssystems auszusuchen.

Die Durchführung der Basis- und sicherungstechnischen Funktionen erfordert aber nicht die gesamte Kapazität des führenden Basisprozessors, sondern nur x-% seiner Kapazität. Dieser führende Basisprozessor hat also noch (100-x)% seiner Kapazität frei, welche er für die Durchführung von vermittlungstechnischen Funktionen zur Verfügung stellt.

Der Betrag von x, also die Stärke der Auslastung des führenden Basisprozessors bei der Durchführung der betriebs und/oder sicherungstechnischen Funktionen, kann in zwei verschiedenen Weisen definiert werden :

Entweder legt man x von vornherein so fest, daß sie der maximalen denkbaren Auslastung des führenden Basisprozessors BP entspricht. Dann ist die für vermittlungstechnische Funktionen zur Verfügung gestellte Restkapazität (100-x)% eine zeitliche unveränderliche Größe.

Es ist jedoch auch möglich, unter x die momentane Auslastung des führenden Basisprozessors zu verstehen, wobei die momentane Auslastung außerordentlich viel kleiner sein kann als die im schlimmsten Betriebsfall je auftretende maximale Auslastung x (max)% dieses führenden Basisprozessors BP. In diesem Fall kann momentan der betreffende führende Basisprozessor — sowie übrigens auch der nichtführende andere Basisprozessor — jeweils maximal (100-x)% seiner Kapazität für vermittlungstechnische Funktionen zur Verfügung stellen. Weil aber im Alarmfall der Bedarf an Kapazität zur Durchführung der betriebs- und/oder sicherungstechnischen Funktionen oft außerordentlich hoch ist, sollte sicherheitshalber die Auslastung des führenden Basisprozessors BP sowie des nichtführenden Basisprozessors BP bevorzugt kleiner als (100-x)% sein, damit alleine ein einziger Basisprozessor BP der beiden Basisprozessoren BP, nämlich damit allein der führende Basisprozessors BP, in jedem Zeitpunkt voll alleine sämtliche Betriebs- und/ oder sicherungstechnische Funktionen übernehmen kann.

Grundsätzlich ist es möglich, daß der betreffende führende Basisprozessor BP sowohl die be- triebstechnischen als auch die sicherungstechni- schen Funktionen gleichzeitig durchführt, beson- ders wenn dafür ein Prozessorbaustein von ausreichender Gesamtkapazität als Basisprozessor BP ausgewählt wurde.

Besonders dann, wenn der Umfang der betriebs- und sicherungstechnischen Funktionen insgesamt so groß ist, daß er kaum noch durch einen einzigen Basisprozessor durchzuführen ist, besonders im Falle einer nachträglichen Erweiterung des Vermittlungssystems, z. B. von 50 000 Teilnehmer auf 100 000 Teilnehmer bei einem Fernsprechvermittlungssystem, dann ist es zweckmäßig, zwei Paare von Basisprozessoren BP anzubringen, von denen das erste Paar insbesondere nur die betriebstechnischen Funktionen, sowie das zweite Paar insbesondere nur die sicherungstechnischen Funktionen durchführt — wobei in jedem dieser beiden Paare jeweils einer der Prozessoren führt und im gleichen Zeitpunkt der andere Prozessor derzeit nicht führend ist, aber seine Kapazität zur Übernahme der Führung entsprechend freihält.

Bei dem in der Figur gezeigten Ausführungsbeispiel sind nur zwei bestimmte, im wesentlichen gleichaufgebaute Basisprozessoren BP angebracht, die zusätzlich zu vermittlungstechnischen Funktionen die betriebs- und/oder sicherungstechnischen Funktionen ausüben. Dadurch, daß diese beiden Basisprozessoren BP bis maximal (100-x)% ihrer Rechtskapazität jederzeit zusätlich vermittlungstechnische Funktionen ausüben, sind die Kapazitäten sämtlicher Prozessoren (BP/CP) maximal ausnutzbar. Die erfindungsgemäße Maßnahme gestattet also, besonders wenig Hardware als Prozessoren anzubringen, um sehr hohe Kapazitäten für vermittlungstechnische Funktionen zur Verfügung zu stellen.

Bei dem in der Figur gezeigten Beispiel können demnach alle Prozessoren BP, CP hardwaremäßig jeweils einen identischen Aufbau haben, das heißt aus völlig gleichen Chips aufgebaut sein.

Bei dem in der Figur gezeigten Beispiel ist der an das Bussystem B : CMY angeschlossene Hauptspeicher CMY aus mehreren über dies ge- doppelten Speicherbanken MB0... MB3 aufge- baut, wobei im Prinzip alle Prozessoren BP, CP über das Bussystem B : CMY Zugriff auf alle Daten des Hauptspeichers CMY bzw. auf alle Daten der Speicherbanken MB haben, soweit nicht — z. B. durch Beschränkung der Adressen — die Berechtigung des Zugriffs eingeschränkt wird.

Die Figur zeigt ferner periphere Einheiten MBG, welche mittelbar oder unmittelbar auf die Leitungen des Vermittlungsnetzwerkes einwirken, z. B. im Rahmen der Wegesuche, Durchschaltung, Signalisierung, usw. Diese peripheren Einheiten MBG sind hier gedoppelt, vgl. die Auskreuzungen der Leitungen. Sie besitzen im gezeigten Beispiel eigene IO-Units, vgl. IOP : MB. Es sind weitere solche IO-Units an die lokalen Busse B : IOC angeschlossen, vgl. IOP, welche jeweils zwar mit weiteren solchen peripheren Einheiten verbunden sind, die aber der Übersichtlichkeit wegen in der Figur nicht mehr gezeigt sind.

Diese IO-Units IOP : MB ... IOP bzw. deren lokale Busse B : IOC sind über IO-Prozessoren IOC, vgl. IOC0, IOC1, mit dem Bussystem B : CMY verbunden. Durch Punkte wurde in der Figur angedeutet, daß noch weitere solche IO- Prozessoren IOC, insbesondere bei sehr großen Vermittlungssystemen, vorgesehen sein können.

Die peripheren Einheiten, vgl. MBG, sind jeweils mit verschiedenen der Prozessoren BP/CP, von Fall zu Fall anders verteilt, verbindbar und/oder auch mit dem Hauptspeicher CMY bzw. mit Teilen von dessen Speicherbanken MB verbindbar. Durch diese Verbindungen können Meldungen und/oder Anfragen von peripheren Einheiten MBG, und Meldungen und/oder Anfragen zu solchen peripheren Einheiten MBG hin, durchge- führt werden. Die vermittlungstechnischen Mel- dungen und/oder Anfragen einer peripehren Einheit MBG werden dabei autonom über das mit ihnen verbundene IO-Unit IOP per Ruf verteilt, bevorzugt indem das jeweils betreffende IO-Unit IOP, wenn es einen Ruf von der peripheren Einheit MBG erhält, dieser rufenden peripheren Einheit MBG einen der Prozessoren BP/CP bzw. einen Teil des Hauptspeichers CMY/MB zuteilt bzw. über das Bussystem B : CMY zuteilen läßt. Diese Zuteilung eines speziellen Prozessoren und/oder eines speziellen Teils des Hauptspeichers CMY an die z. B. zwei peripheren Einheiten MBG (1 Verbindung belegt z. B. zwei MBGs) wird dann noch in einem Datenfeld abgespeichert, wobei dieses Datenfeld auch innerhalb einer Speicherbank des Hauptspeichers CMY· angebracht sein kann. Durch diese Abspeicherungen im Datenfeld sind, insbesondere unter Mitwirkung der jeweils betroffenen IO-Units IOP der betroffenen peripheren Einheiten MBG, alle späteren Meldungen oder Anfragen der betroffenen peripheren Einheiten MBG, welche diesem Ruf nachfolgen, jeweils zum selben, vorher zugeteilten Prozessor BP/CP bzw. zum selben Hauptspeicherteil MB sendbar, damit dort die betreffenden vermittlungstechnischen Funktionen, welche durch den Ruf ausgelöst werden, fortgesetzt werden können.

Diese autonome Zuteilung per Ruf ermöglicht eine angenähert gleichmäßige Belastung aller Prozessoren CP bzw. BP mit vermittlungstechnischen Funktionen — zumindest kann diese Zuteilung dann jeweils entsprechend der momentanen Auslastung der betreffenden Prozessoren BP/CP so gesteuert werden, daß die dem Ruf folgenden Meldungen und/oder Anfragen vermittlungstechnischer Art wirklich jeweils rasch von einem der Prozessoren, der noch eine ausreichend freie Kapazität hat, durchgeführt werden können.

Die Auswahl bzw. die Verteilung der Prozesso- ren zur Durchführung der vermittlungstechni-

schen Funktionen, welche durch den Ruf ausgelöst werden, kann dabei zyklisch erfolgen, wobei aber bei Überlastung eines Prozessors CP/BP dieser Prozessor im zyklischen Auswahlverfahren übersprungen wird. Durch eine solche zyklische Verteilung der Aufgaben bzw. Rufe auf die betreffenden Prozessoren ist eine bis zu einem gewissen Grad gleichmäßige Belastung der Prozessoren erreichbar. Rasch werden im allgemeinen alle Prozessoren mindestens eine gewisse Teilauslastung aufweisen. Es wird auch ein Fehler, bzw. die Neigung zu fehlerhaften Verarbeitungen, in den Prozessoren stets rasch gesucht, wodurch mittels betriebstechnischer Funktionen, die vom führenden Basisprozessors BP durchgeführt werden, der betreffende fehlerhafte Prozessor vorläufig außer Betrieb gesetzt und beim zyklischen Verteilen jeweils übersprungen werden kann, wobei auch eine — evtl. teilweise — Selbstheilung der Zentralsteuereinheit, z. B. mittels Ersatzschaltungen und Rettung von Speicherinhalten, durchgeführt werden kann.

Wenn, wie in der Figur gezeigt ist, am Bussystem B : CMY der zentrale Hauptspeicher CMY bzw. seine Speicherbanken MB angeschlossen sind, kann mindestens eine Mehrzahl der Prozessoren BP/CP, wenn nicht sogar alle Prozessoren BP/CP, quasisimultan über ihnen jeweils zugeteilte Zeitschlitze bzw. Zeitkanäle nach dem Zeitmultiplexprinzip, Zugriff zum Hauptspeicher CMY bzw. zu Teilen davon haben. Durch diese Zeitmultiplex-Betriebsweise des Bussystems B : CMY müssen also nicht jeweils längere Kommunikationen zwischen dem Hauptspeicher CMY und beliebigen Prozessoren CP bzw. BP abgewartet werden, bis ein anderer Prozessor CPx seinerseits endlich auf Daten des Speichers CMY zugreifen kann bzw. dort Daten hinterlegen kann. Diese Zeitmultiplexbetriebsweise ist demnach in Anbetracht der vielen, gleichzeitig parallelarbeitenden und mit jeweils verschiedenen Aufgaben befaßten Prozessoren BP, CP zur Verkürzung der Zugriffszeit zum gemeinsamen Speicher CMY sehr vorteilhaft. Besonders vorteilhaft ist, wenn der Hauptspeicher eine Vielzahl von unabhängig voneinander arbeitenden Speichersteuerungen bzw. Decodierern aufweist, wobei jeweils eine solche Speichersteuerung einem der Prozessoren CP/BP individuell vorübergehend zugeordnet sein kann. Dies ist also besonders dann der Fall, wenn der Hauptspeicher aus einer Mehrzahl von parallel arbeitenden Speicherbanken MB besteht, wobei, bei quasisimultanem Zugriff nach dem Zeitmultiplexprinzip auf den Hauptspeicher CMY, jeweils einzelne der Zeitschlitze bzw. Zeitkanäle auf dem Bussystem B : CMY jeweils einzelnen der Speicherbanken MB zugeordnet sind.

Der Aufbau der einzelnen Organe dieser zentralen Steuereinheit, z. B. der Prozessoren BP/CP, der Speicherbanken MB bzw. des Hauptspeichers CMY, der IO-Prozessoren IOC, welche z. B. auch eine verschiedene Anzahl von lokalen Systembussen B : IOC, vgl. die Ausgänge O ... 7 des IO-Prozessors IOCO, haben, kann jeweils an sich beliebig sein. Sie müssen nur zum gewählten Bussystem B : CMY passen bzw. an dessen Aufbau bzw. Betriebsweise angepaßt werden.

Im lokalen, prozessorindividuellen Speicher LMY können jeweils, zum Zwecke der Reduzierung der Zugriffe zum Hauptspeicher CMY, die für den Ablauf dynamisch wichtigen Codes und lokalen Daten abgespeichert werden. Die Prozessoren BP/CP können aber jeweils auch autonome bzw. weitgehend autonome Rechner darstellen, welche über das Bussystem B : CMY auch von Fall zu Fall mit anderen Organen der Zentralsteuereinheiten zusammenarbeiten können.

Die betriebstechnischen und auch die sicherungstechnischen Aufgaben, welche von den Basisprozessoren BP betreut werden, erzeugen, dynamisch betrachtet, nur relativ geringe Lasten, so daß für sie eine besondere Lastverteilung auf mehrere Prozessoren im allgemeinen nicht notwendig ist. Die vermittlungstechnischen Funktionen haben gegenüber den betriebs- und sicherungstechnischen Funktionen erheblich größeren Umfang, so daß zwei Basisprozessoren BP für eine hohe Vielzahl von Prozessoren CP im allgemeinen ausreichend ist.

Die peripheren Einheiten können sowohl gerätetechnische Organe darstellen, als auch vermittlungstechnische Teilfunktionen von peripheren Organen, welche einen größeren Komplex verschiedener Funktionen ausführen, darstellen. Es genügt im allgemeinen, sie über ungedoppelte, also einfach vorhandene IO-Units vgl. IOP : MB ... IOP, an die IO-Prozessoren IOC anzuschließen, wenn die peripheren Organe, vgl. MBG, für sich Auskreuzungen enthalten, vgl. die Figur. Diese IO-Units IOP und/oder die zugehörigen IO-Prozessoren IOC können für sich zusätzliche Prüfungsfunktionen aufweisen, um unkontrollierte Zugriffe zu den Prozessoren BP, CP und zum Hauptspeicher CMY, welche auf Fehlern beruhen, zuerschweren.

Bei einem ausgeführten Beispiel gem. der Figur wurden für die Prozessoren BP/CP jeweils SAB 80286-Mikroprozessoren verwendet, die jeweils über eine physikalischen Adressraum von 16 MByte verfügen. Insgesamt wurden 12 solche Prozessoren mit je zwei MByte-Speichern LMY angebracht. Alle Prozessoren, nicht nur die Basisprozessoren wurden zur Verbesserung der Fehlererkennung gedoppelt und waren jeweils nur paarweise abschaltbar. Die betreffenden Prozessorenpaare arbeiteten synchron. Bei Schreibzyklen wurden die Signale stets von einem bevorzugten Prozessor jedes Paares genommen, bei Lesezyklen wurden beide Prozessoren des Paares versorgt.

Die Unterscheidung zwischen lokalem, prozessorindividuellen Speicher und Hauptspeicher wurde über die Adresse durchgeführt, d. h. die für den lokalen, prozessorindividuellen Speicher belegten Adressen waren im Hauptspeicher für dieses betreffende Prozessorpaar nicht direkt erreichbar. Die Kommunikation zwischen den Prozessoren erfolgte über das Bussystem durch Setzen von Dringlichkeiten.

Die aus Sicherheitsgründen gedoppelte Einhei-

ten aus IO-Prozessor IOC, mit zugehörigem lokalen Bus B : IOC und IO-Unit IOP teilen sich im Regelfall die anfallenden Lasten.

Der Datenaustausch zwischen den IO-Units IOP und den Prozessoren BP/CP erfolgte beim ausgeführten Beispiel über den Hauptspeicher CMY, wobei für die Prozessoren IOC jeweils Bausteine 8086 verwendbar sind.

Auch die lokalen Busse B : IOC wurden im Zeitmultiplexbetrieb, d. h. mit Zyklenverschachtelung, betrieben, was den Durchsatz dieses Busses beträchtlich erhöhte, indem ein zweiter Zyklus schon dann angestoßen werden kann, bevor ein erster Zyklus abgeschlossen ist. Auch der Bus des Bussystems B : CMY war aus Sicherheitsgründen gedoppelt, ebenso wie der Hauptspeicher CMY bzw. seine Teile, vgl. die entsprechenden, symbolisch angedeuten Leitungen in der Figur. Die in der Figur zusätzlich angedeuteten Auskreuzungen der Leitungen deuten an, daß bei Ausfall von Bauteilen, z. B. des Bussystemteils B : CMY1, stets Ersatzwege zum anderen Teil aller Zwillingsanordnungen zur Verfügung stehen.

Im Normalfall arbeiteten die beiden Busses des Bussystems B : CMY parallel und behandelten identische Informationen. Das Bussystem B : CMY arbeitete nach einem Multiplexverfahren mit vier Zeitschlitzen, was bei Verwendung von 12 Prozessoren BP/CP für eine Vermittlungssystem, jedenfalls vorerst, ausreichte. Den vier Zeitschlitzen waren die vier Speicherbanken MBO ... MB3 so zugeordnet, daß jeder Zeitschlitz fest einer Speicherbank zugeordnet war, was sich als ausreichend für ein Fernsprechvermittlungssystem mit einigen zigtausend Teilnehmern erwies. Die Arbitrierung wurde vor der Zuteilung eines Zeitschlitzes an die Prozessoren BP/CP/IOC durchgeführt, um die Leistung des Bussystems zu steigern.

Zu den peripheren Einheiten zählten auch O/M-Einheiten (Operation and Maintenance), die bei Zentralsteuereinheiten schon bisher oft verwendet werden, vgl. z. B. die Beschreibung von solchen Zentralsteuereinheiten, insbesondere des Typs SSP112D in Siemens, telcom report 4 (1981), Beiheft « Digitalvermittlungssystem EWSD ». In dieser Druckschrift ist auch insbesondere die Funktion von peripheren Einheiten näher beschrieben.

**Patentansprüche**

1. Zentralsteuereinheit eines Vermittlungssystems, insbesondere Fernsprech-Vermittlungssystems, mit

einer Vielzahl von im wesentlichen gleich aufgebauten Prozessoren, (BP, CP), welche individuell eigene Speicher (LMY) haben können, welche verteilt vermittlungstechnische Funktionen durchführen und welche bei einem Funktionsausfall von einem anderen der Prozessoren vertreten werden, sowie

einem zentralen Bussystem (B : CMY), an welches die Prozessoren (BP, ZP) angeschlossen sind,

dadurch gekennzeichnet, daß

nur zwei Prozessoren (BP) als sogenannte Basisprozessoren (BP) zusätzlich betriebs- und/oder sicherungstechnische Funktionen in der Weise durchführen, daß

der erste Basisprozessor (BPO), nämlich der führende der beiden, also im führenden Zustand, geeignet ist diese derzeitigen betriebs- und/oder sicherungstechnischen Funktionen alleine durchzuführen, aber dazu nur zu einem Teil, nämlich zu x % seiner Rechenkapazität, ausgelastet ist, so daß er bis zu (100-x)% seiner Rechankapazität noch vermittlungstechnische Funktionen übernehmen kann,

der zweite Basisprozessor (BP1), der im nichtführenden Zustand ist, derart ausgestattet ist, daß er stets jeweils mindestens x % seiner Kapazität freihält zur evtl. späteren Übernahme der Führung der betriebs- und/oder sicherungstechnischen Funktionen vom ersten, bisher führenden Basisprozessor (BP0).

der zweite Basisprozessor (BP1) also geeignet ist, vor der Übernahme der Führung seinerseits jeweils höchstens bis zu (100-x)% seiner Kapazität vermittlungstechnische Funktionen zu übernehmen.

2. Zentralsteuereinheit, insbesondere mit einem an das Bussystem (B : CMY) angeschlossenen Hauptspeicher (CMY), nach Patentanspruch 1, dadurch gekennzeichnet, daß

zumindest ein Teil von vermittlungstechnischen peripheren Einheiten (MBG) über IO-Units (IOP) und IO-Prozessoren (IOC) an das Bussystem (B : CMY) angeschlossen ist,

die peripheren Einheiten (MBG), welche auf Leitungen des Vermittlungsnetzwerkes einwirken und welche verteilt mit verschiedenen der Prozessoren (BP, CP) und/oder mit dem Hauptspeicher (CMY) für Meldungen und/oder Anfragen verbindbar sind, ihre vermittlungstechnischen Meldungen und/oder Anfragen autonom über ihre IO-Units (IOP) per Ruf verteilen,

indem das jeweils betreffende IO-Unit (IOP), wenn es einen Ruf erhält, der rufenden peripheren Einheit (MBG) einen der Prozessoren (BP, CP), und/oder einen Teil des Hauptspeichers (CMY) bzw. einer Speicherbank (MB) desselben, zuteilt bzw. bevorzugt vom Bussystem (B : CMY), zuteilen läßt, sowie diese Zuteilung in einem Datenfeld (z. B. in MB3) abspeichert bzw. abspeichern läßt,

so daß, insbesondere mittels des jeweils betreffenden IO-Units (IOP) der betroffenen peripheren Einheiten (MBG), alle diesem Ruf folgenden Meldungen und/oder Anfragen der betroffenen peripheren Einheiten (MBG) jeweils zum selben Prozessor (BP, CP) bzw. zum selben Hauptspeicherteil (MB) sendbar sind.

3. Zentralsteuereinheit nach Patentanspruch 2, dadurch gekennzeichnet, daß

die Auswahl bzw. Verteilung der Prozessoren (CP, BP) zur Durchführung vermittlungstechnischer Funktionen in der Regel zyklisch ist,

aber, bei Überlastung eines Prozessors (BP, CP), dieser Prozessor im zyklischen Auswahlverfahren übersprungen wird.

4. Zentralsteuereinheit mit einem an das Bussystem (B : CMY) angeschlossenen zentralen Hauptspeicher (CMY) nach Patentanspruch 1, 2 oder 3, dadurch gekennzeichnet, daß

mindestens eine Mehrzahl der Prozessoren (BP, CP) quasisimultan über ihnen zugeteilte Zeitschlitze bzw. Zeitkanäle nach dem Zeitmultiplexprinzip Zugriff zum Hauptspeicher (CMY) hat.

5. Zentralsteuereinheit nach Patentanspruch 4, dadurch gekennzeichnet, daß

der Hauptspeicher (CMY) aus einer Mehrzahl von parallel arbeitenden Speicherbanken (MB) besteht, und

beim quasisimultanen Zugriff auf den Hauptspeicher (CMY) jeweils einzelne der Zeitschlitze bzw. Zeitkanäle jeweils einzelnen der Speicherbanken (MB) zugeordnet sind.

## Claims

1. A central control unit of a switching system, in particular a telephone switching system with

a plurality of processors (BP, CP) which are of fundamentally-identical construction and which can be provided with individually-assigned stores (LMY) which carry out distributed switching-orientated functions and which, in the event of a funtional failure, are representend by another of the processors and

a central bus system (B : CMY) to which the processors (BP, ZP) are connected,
characterised in that

only two processors (BP), serving as so-called base processors (BP), additionally carry out operational and/or security-orientated functions in such manner that

the first base processor (BPO), namely the controlling processor of the two processors, thus in the controlling state, is capable of carrying out alone these instantaneous operational and/or security-orientated functions but for this purpose is only partially loaded, namely up to x % of its computing capacity, so that up to (100-x)% of its computing capacity can additionally assume switching-orientated functions,

the second base processor (BP1) which is in the non-controlling state, is equipped in such manner that it always keeps available at least x % of its capacity in order to possibly later take over the control of the operational and/or security-orientated functions from the first, previously-controlling base processors (BPO),

the second base processor (BP1) is thus suitable, prior to assuming control, to itself undertake switching-orientated functions in respect of a maximum of up to (100-x)% of its capacity.

2. A central control unit, in particular comprising a main store (CMY) connected to the bus system (B : CMY) as claimed in patient claim 1, characterised in that

at least a part of switching-orientated peripheral devices (MBG) are connected to the bus system

(B : CMY) via IO-units (IOP) and IO-processors (IOC),

the peripheral devices (MBG) which influence the lines of the switching network and which can be connected in distributed fashion to various of the processors (BP, CP) and/or to the main store (CMY) for messages and/or requests, distribute their switching-orientated messages and/or requests autonomoulsy between their IO-units (IOP) in respect of each call,

in that when it receives a call the respective IO-unit (IOP) of the calling peripheral device (MBG) allocates or brings about the allocation thereof, preferably via the bus system (B : CMY), one of the processors (BP, CP) and/or a part of the main store (CMY) or a storage bank (MB) thereof respectively, and stores, or brings about the storage of this allocation respectively in a data array (e.g. in MB3),

so that, in particular by means of the respective IO-units (IOP) of the respective peripheral devices (MBG), all the messages and/or requests or the respective peripheral devices (MBG) which follow this call can be transmitted to the same processor (BP, CP) and to the same main storage component (MB) respectively.

3. A central control unit as claimed in patient claim 2, characterised in that

the selection and distribution of the processors (CP, BP) for the execution of switching-orientated functions generally takes place cyclically,

but that, in the event of the overloading of a processor (BP, CP), this processor is skipped in the cyclic selection process.

4. A central control unit with a central main store (CMY) connected to the bus system (B : CMY) as claimed in patent claims 1, 2 or 3, characterised in that

at least a majority of the processors (BP, CP) have quasi-simultaneous access to the main store (CMY) via assigned time slots and time channels in accordance with the t.d.m. principle.

5. A central control unit as claimed in patent claim 4, characterised in that

the main store (CMY) comprises a plurality of parallel operating storage banks (MB) and

in the case of quasi-simultaneous access to the main store (CMY) certain of the time slots and time channels are each assigned to certain of the storage banks (MB).

## Revendications

1. Unité de commande centralisée d'un système de commutation, en particulier d'un système de commutation téléphonique, comprenant

un grand nombre de processeurs (BP, CP) de constitution essentiellement identique, qui peuvent avoir des mémoires (LMY) qui leur sont propres individuellement, exécutent des fonctions de commutation réparties sur eux et sont remplacés, dans le cas d'une défaillance de fonctionnement, par un autre des processeurs, ainsi que

un système de bus central (B : CMY) auquel sont raccordés les processeurs (BP, CP), caractérisé en ce que

seulement deux processeurs (BP) exécutent, en plus, en tant que processeurs dits de base (BP), des fonctions d'exploitation et/ou de sécurité en ce sens que

le premier processeur de base (BPO), constituant le processeur pilote de deux processeurs de base, convient, à l'état de pilote donc, pour exécuter tout seul ces fonctions instantanées d'exploitation et/ou de sécurité, mais est seulement utilisé ou chargé en partie pour ce faire, à savoir à x % de sa capacité de calcul, si bien qu'il peut reprendre et assurer en plus des fonctions de commutation, jusqu'à (100-x)% de sa capacité de calcul,

le second processeur de base (BP1), lequel n'est pas à l'état pilote, est réalisé de manière qu'il maintienne toujours au moins x % de sa capacité libre pour l'éventuelle reprise ultérieure du pilotage des fonctions d'exploitation et/ou de sécurité du premier processeur de base (BPO) qui était jusqu'alors processeur pilote et

le second processeur de base (BP1) est donc en mesure, avant de reprendre le pilotage, de reprendre et d'assurer, de son côté, des fonctions de commutation, tout au plus jusqu'à (100-x)% de sa capacité.

2. Unité de commande centralisée, comprenant en particulier une mémoire principale (CMY) raccordée au système de bus (B : CMY), selon la revendication 1, caractérisé en ce que

au moins une partie d'unités périphériques de commutation (MBG) est raccordée au système de bus (B : CMY) à travers des unités d'E/S (IOP) et à travers des processeurs d'E/S (IOC),

les unités périphériques (MBG), agissant sur des lignes du réseau de commutation et pouvant être connectées de façon répartie à différents processeurs (BP, CP) et/ou à la mémoire principale (CMY), pour des messages et/ou des demandes, répartissent leurs messages et/ou demandes de commutation de façon autonome, appel par appel, par leurs unités d'E/S (IOP),

par le fait que l'unité d'E/S (IOP) concernée à chaque fois, lorsqu'elle reçoit un appel, attribue à l'unité périphérique (MBG) appelante l'un des processeurs (BP, CP) et/ou une partie de la mémoire principale (CMY), respectivement un bloc de mémoire (MB) de cette mémoire, ou, de préférence, confie cette attribution au système de bus, et mémorise ou laisse mémoriser cette attribution dans une zone de données (dans MB3 par exemple),

si bien que tous les messages et/ou demandes suivant cet appel des unités périphériques (MBG) concernées, peuvent être envoyés chaque fois au même processeur (BP, CP) ou à la même partie (MB) de la mémoire principale, notamment au moyen des unités d'E/S (IOP) correspondantes des unités périphériques (MBG) concernées.

3. Unité de commande centralisée selon la revendication 2, caractérisée en ce que

la sélection respectivement la répartition des processeurs (CP, BP) pour l'exécution de fonctions de commutation est généralement cyclique, mais

en cas de surcharge d'un processeur (BP, CP), ce processeur est sauté dans le processus cyclique de sélection.

4. Unité de commande centralisée, comprenant une mémoire principale (CMY) centrale, raccordée au système de bus (B : CMY), selon la revendication 1, 2 ou 3, caractérisée en ce que

au moins une majorité des processeurs (BP, CP) peut accéder de façon quasisimultanée à la mémoire principale (CMY) par des tranches de temps ou voies temporelles qui leur ont été assignées, selon le principe du multiplexage temporel.

5. Unité de commande centralisée selon la revendication 4, caractérisée en ce que

la mémoire principale (CMY) est formée de plusieurs blocs de mémoire (MB) travaillant en parallèle et

en cas d'accès quasisimultané à la mémoire principale (CMY), des tranches de temps ou voies temporelles individuelles sont assignées à des blocs de mémoire (MB) individuels.